# EUROPEAN PATENT APPLICATION

(11) **EP 3 061 733 A1**
(43) Date of publication of application: **31.08.2016**
(21) Application number: 15199184.1
(22) Date of filing: 10.12.2015
(51) Int. Cl.: C04B 7/24, C04B 14/40, C04B 18/16, B09B 3/00

(54) **PROCESS FOR INERTING RESIDUAL MATERIALS CONTAINING ASBESTOS**

(30) Priority: 24.02.2015 IT MI20150271
(71) Applicant: Ecological Services for Environment S.r.l., 24121 Bergamo (IT)
(72) Inventor: CINTI, Giovanni, 24124 BEERGAMO (IT); CASSAR, Luigi, 20097 SA DONATO MILANESE (IT)
(74) Representative: Giuli, Maurizio Mario Galdino

(57) **Abstract**

The present invention relates to a process for inerting residual materials containing asbestos which comprises a pre-treatment phase of the residual material and a subsequent thermal treatment phase at a temperature higher than 900°C for a time exceeding 20 minutes.

## Description

The present invention relates to a process for inerting residual materials containing asbestos.

The present invention derives from the necessity of eliminating materials containing asbestos. It has, in fact, long been known that asbestos, under certain degradation conditions of materials containing it, can be dangerous for the health. Asbestos fibres may be released into the atmosphere and, due to their form and size, can reach the deep respiratory tract, damaging the alveolar lung tissue eventually causing emphysema and cancer.

Materials containing asbestos, whose chemical composition is 3MgO - 2SiO₂ 2H₂O, must therefore be handled adopting specific precautions for the recovery of the material, its transportation and finally its disposal in landfills in specific sites, where waste material is stored permanently. Asbestos is one of the materials of a natural origin with the highest chemical inertia, so much so that since ancient times it has been extracted and appreciated specifically because of this characteristic; consequently, the material, after being sent for disposal, preserves its properties for an indefinite period of time. Particular and costly precautions are therefore necessary for guaranteeing that residual material containing asbestos does not come into contact with the atmosphere and is completely contained underground.

Asbestos in the form of fibres has long been used, together with cement, for the preparation of sheets or pipes for the building industry. The elimination of the huge quantities of products containing asbestos, used in building applications or for other uses, widely diffused in all living and industrial environments, has become an extremely serious problem, with respect to both the quantity of material in question and also for the difficulty in finding suitable areas for creating specific landfills, with the additional difficulty of obtaining obtaining permits and approvals from the authorities in charge and communities involved.

The main known disposal techniques, as an alternative to confinement in landfills, envisage the vitrification of asbestos at high temperatures with the addition of suitable vitrifying agents. This process comprises a first grinding phase of the waste containing asbestos into powder having a particle-size lower than 5 mm and, subsequently, mixing the ground product obtained, with Na₂O₃ (to lower the melting point) and with SiO₂ (as vitrifying agent) followed by thermal treatment at temperatures not lower than 1,000°C, preferably around 1,250°C to obtain a vitreous material, free of fibres.

A solution of this kind has a double problem: the necessity of grinding the waste containing asbestos with the risk of dispersing the powder formed into the atmosphere, and the necessity of operating at particularly high temperatures and therefore with unfeasible costs with respect to the quantity of residual material containing asbestos to be treated.

In order to avoid the grinding phase described above, alternative processes envisage that the residual material be subjected to dedusting treatment by spraying or immersion in suitable polymeric substances that adhere to the end-product, with subsequent thermal treatment.

The Applicant has now surprisingly found a process that overcomes the disadvantages of the known art described above, by providing a process for inerting residual materials containing asbestos with a pre-treatment phase without the dispersion of powder into the atmosphere, which does not envisage dedusting treatment with polymeric substances, and a thermal treatment phase operating at much lower temperatures with respect to the temperatures of the vitrification process.

An object of the present invention relates to a process for inerting residual materials containing asbestos comprising a pre-treatment step of the residual material and a subsequent thermal treatment step at a temperature higher than 900°C and for a time exceeding 20 minutes, preferably at a temperature ranging from 1,000 to 1,100°C and for a time ranging from 40 minutes to 5 hours.

Said process for inerting residual materials containing asbestos is preferably applied to residual materials containing asbestos used in the building industry, i.e. to so-called end-products (sheets, panels, pipes etc.) made of asbestos-cement.

A further object of the present invention relates to the use of the material inertized with the process according to the present invention as raw material for the preparation of clinkers.

An asbestos-cement sheet has the typical composition indicated in the following table

| COMPONENT | % BY WT |
|---|---|
| ASBESTOS | 8.3 |
| CEMENT | 52.5 |
| INERT PRODUCT (CARBONATE) | 17.3 |
| WATER | 21.9 |

It is known that the physical structure of asbestos fibres, which is in fact solely responsible for the dangerous nature of this material, is substantially modified when subjected to high-temperature thermal treatment. The fibrous texture of asbestos is in fact maintained up to temperatures in the order of 600°C, whereas at temperatures higher than 700°C, the asbestos fibres begin to weld with each other, modifying their dimensional characteristics, agglomerating into entities which are still fibrous but having a larger diameter, reducing their length, with a consequent reduction in their aspect ratio, a parameter with is indicative of their dangerousness.

At these temperatures, chemical reactions also contemporaneously take place, which transform the asbestos into forsterite, a chemical compound which no longer has any carcinogenic activity:

2 (3MgO - 2SiO₂ - 2H₂O) → 3 Mg₂SiO₄ + 4H₂O + SiO₂

Furthermore, by further heating the material up to 900°C, the forsterite also disappears by reaction with calcium oxide which is formed, in a cement kiln, by disassociation of the limestone, according to the following reaction:

Mg₂SiO₄ + 2CaO → Ca₂SiO₄ + 2MgO

Consequently, by treating material containing asbestos in an environment rich in limestone at the disassociation temperature of the latter, a complete and total transformation of the original compound is obtained, with the formation of dicalcium silicate and magnesium oxide (periclase).

The temperature and time necessary for causing the transformation of the fibres into soft amorphous material are inversely proportional: this means that with an increase in the temperature, the time necessary decreases as the transformation of the fibres is completed. Already at about 1,000°C, the residence time of the residual material to be treated in the kiln is reduced to a few minutes, i.e. times compatible with industrial practice.

The raw chemical composition of the material does not change, but at the end of the thermal treatment at 1,000°C, the asbestos is transformed into dicalcium silicate and magnesium oxide and is mixed with the components forming the matrix in which the asbestos was dispersed, typically hydrated cement and inert products having various particle-sizes.

After treatment at 1,000°C, the asbestos-cement material treated, contains about 90% of hydraulically active products, i.e. hydraulic phases normally present in clinkers.

It can then be ground to be used as flour for producing clinkers. The quantity of this material obtained by inerting residual material containing asbestos, which can be introduced into the production process of clinkers, is only limited by the magnesium content which can be present in the cement, typically limited to 5% by weight with respect to the total weight, for example in the standard EN 197 in force in the European Union.

The materials present and mixed with asbestos in asbestos-cement end-products are cement and various kinds of inert products, generally silicates and carbonates, and organic substances used in small quantities are sometimes present for conferring certain characteristics to the end-product, such as colour, flexibility, lightness, etc.,.

In particular, the process according to the present invention envisages a first preferred embodiment with a pre-treatment phase with wet grinding for the preparation of a material to be subsequently thermally treated in a cement kiln which represents a dry process; the second embodiment has a pre-treatment phase without grinding for the preparation of a material to be subsequently treated with a dry thermal treatment, in which the material downstream of the thermal treatment can be fed as recycled material to a cement kiln or to a cement-grinding mill.

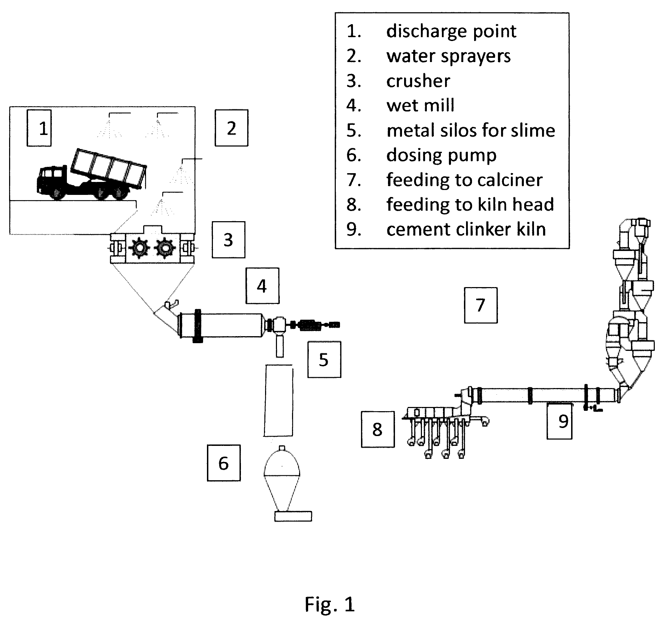

The process according to the present invention in accordance with the first embodiment is schematically represented in figure 1.

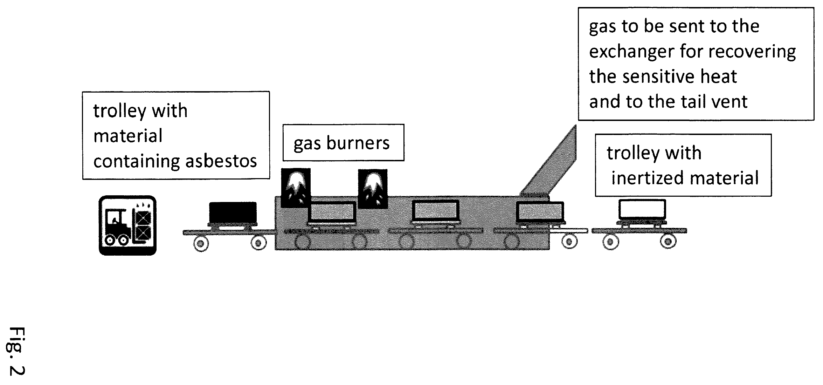

The process according to the present invention in accordance with the second embodiment is schematically represented in figure 2.

The process according to the present invention therefore allows asbestos to be transformed, i.e. eliminating the physical characteristics which make asbestos dangerous for the health, by high-temperature thermal treatment; preventing the diffusion of asbestos fibres into the atmosphere during the preparation phases of the material containing asbestos; re-using the inertized material within the treatment itself (first case) or after treatment (second case).

This avoids having to send dangerous material to landfills.

The first preferred embodiment of the process according to the present invention comprises a pre-treatment phase with wet grinding of the residual material containing asbestos and a subsequent thermal treatment phase at a temperature higher than 900°C, directly in a kiln for the production of clinkers.

An essential characteristic for inerting residual material containing asbestos is the first pre-treatment phase with wet grinding, which must reduce the material into extremely fine particles, before being subjected to the thermal treatment phase, said subsequent thermal treatment step preferably being carried out in a technological cycle kiln for the production of cement clinkers.

Said first grinding step is extremely important as the reactions that must take place in the kiln for converting the raw materials into clinkers prevalently take place in solid phase and mainly exploit the contact between surfaces of the particles of raw material: in this way, sintering reactions between the main oxides take place. The presence of large surfaces is therefore fundamental.

The first step of the process according to the first embodiment of the invention must consequently pre-treat the residual material containing asbestos to bring it from large dimensional sizes in which it is recovered (sheets, panels, pipes) to a fine powder with an average particle-size of a few tens of microns, preferably ranging from 5 to 50 microns.

The pre-treatment step with wet grinding is carried out by means of a first crushing treatment in which the residual material containing asbestos, in the presence of water in such a quantity as to obtain slime having a humidity ranging from 35 to 40%, is crushed into pieces having maximum dimensions of 10 - 15 centimetres and a second actual grinding treatment which produces a slime in which the particles of solid material have a fineness of a few tens of micrometres, preferably ranging from 5 to 50 micrometres.

The humidity percentage indicated above refers to the wet substance, in which a quantity of dry material ranging from 60 to 65% by weight, is therefore present.

In this way, neither the crushing treatment nor the actual grinding creates powder emissions or any kind of fibre. It is essential, in fact, that neither treatment forming the pre-treatment phase with wet grinding should create any dispersion of asbestos fibres into the outside atmosphere. This is particularly important above all in the first crushing treatment which is typically carried out in machines which are not closed but simply dedusted, maintaining the machine and its external communications in depression, with the production of high emission flow-rates, which inevitably contain a certain quantity of powders (even minimum) and therefore also potentially a certain quantity of fibres.

The water necessary for the production of slime to be subjected to the pre-treatment step with wet grinding is added to the residual material containing asbestos in the phases prior to the grinding: it is added in nebulized form in the unloading phase of the truck and is subsequently dripped into the crusher of the mill so as to add, already in the previous phases, part of the quantity of water necessary for the production of slime downstream of the mill itself.

The quantity of water added to the process in this phase is largely in excess of that required for abating powders and fibres that develop in the crushing phase, thus guaranteeing a safe prevention of any diffusion phenomenon towards the outside.

The slime thus obtained downstream of the pre-treatment step with wet grinding, i.e. downstream of the crushing and grinding treatment, is then sent to a collection tank, maintained under constant mechanical stirring to prevent sedimentation of the suspension, and is subsequently dosed and sent to thermal treatment in the kiln by means of specific volumetric pumps.

Basically, therefore, in this embodiment of the process according to the present invention, the residual material containing asbestos, prepared in the cement works in sealed packages to avoid the diffusion of fibres in the transportation phase, is immediately sprayed with water in the unloading phase, sprayed again with water in the crushing and wet grinding phase using all the water previously sprayed. There are consequently no processing phases during which the asbestos fibre can be dispersed into the atmosphere, neither is there any water to be purified, as the same water used for preventing diffusion of the powders and fibres remains in the slime which is sent to the collection tank and subsequently to the kiln where it evaporates very rapidly due to the high temperatures.

By suitably regulating the quantities of water sprayed onto the material in the reception phase and subsequently in the crushing phase, the diffusion of powders and fibres in these processing phases is, in fact, prevented. Further water is then added in the grinding phase to obtain a slime which is sufficiently fluid and smooth as to be easily dosed and pumped into the kiln.

A surprising aspect which is of particular interest is represented by the fact that the pre-treatment according to this embodiment envisages the use of water exclusively, without any need for further additions of any kind of additive.

Furthermore, the water necessary for preventing the diffusion of powder and fibres in the first treatment steps (reception and crushing of the material containing asbestos) is always a quantity which is much lower than that necessary for the formation of a slime suitable for the subsequent dosing system and feeding to the kiln, with the result that there is no formation of wastewater, more or less polluted, to be treated separately: all the water and all the material containing asbestos, now in the form of wet slime, are sent and fed to the kiln.

At the end of the pre-treatment step with wet grinding of the process according to the present invention, the asbestos present in the residual material to be treated, is chemically and physically unchanged, except for the fact that the residual material is present in the form of particles having dimensions preferably ranging from 5 to 50 microns which, as they are dispersed in water, cannot be diffused into the atmosphere.

In order to obtain the definitive inerting of residual material containing asbestos and therefore the ultimate transformation into a non-dangerous material, it is necessary to proceed with the second step of the process according to the present invention, i.e. thermal treatment at a temperature higher than 900°C and for a time of at least 20 minutes, and said subsequent thermal treatment step is preferably carried out in this embodiment of the invention, in a technological cycle kiln for the production of cement clinkers, to which the slime containing asbestos obtained at the end of the previous grinding phase, is fed.

The slime containing asbestos is injected into the kiln and the feeding/injection point depends on the type of kiln present in the plant. The feeding of the slime is effected:
in the calciner for dry kilns with precalcination;
in the riser duct of the preheater for dry kilns with only preheater in suspension;
at the inlet of the rotating tube for semidry kilns; with a "mid kiln" injection system for long "dry" or "wet" kilns.

The injection point has a temperature of at least 900°C and under these conditions, the water evaporates rapidly, whereas the dry part is rapidly brought to the temperature at which the demolition of the asbestos structure initiates. At the increasingly higher temperatures that the material encounters on its way towards the discharge of the kiln, sintering reactions of the oxides take place, to form a cement clinker completely indistinguishable from any other clinker.

As previously indicated, the quantity of said residual material containing asbestos which can be introduced in the process for the production of clinkers, is only limited by the content of magnesium that can be present in the cements, typically lower than 5% by weight with respect to the total weight. The raw materials are consequently suitably selected in order to limit the magnesium content to values generally much lower than those required by law. The quantity of residual material containing asbestos that can be added to the production process of clinkers, for example made of Portland cement, is therefore limited to the difference between the magnesium already present in a mixture and the magnesium content required by standards.

Considering that asbestos is only a small percentage of the materials containing it and that, in turn, magnesium is only a small part of the asbestos itself, there is a wide addition margin, in any case variable in relation to the quantity of magnesium naturally present in the raw materials already used. This limitation is therefore more theoretical than real.

The mixture of raw materials fed to the kiln is obviously appropriately calculated and modified so as to take into account the supply of Si, Ca and Mg provided through injecting the slime of residual material containing asbestos.

A fundamental advantage of the process according to the present invention is the production at the end of the same process, of a product, clinker or cement by grinding the clinker with gypsum, in which the asbestos is ultimately eliminated, also eliminating all the risks of danger for the health, and at the same time safeguarding the health of the employees who never come into contact with the emission of asbestos fibres or powders, as each phase of the process avoids the emission of powders and fibres, either of the diffused or channelled type.

The introduction of water in the production process, whatever it may be, jeopardizes the process yields and in particular the heat consumption increases. This, however, is not a limiting factor as, by means of simple quantitative evaluations, it can be easily observed how these increases are tolerable, as they are only slightly higher than the natural variability of the specific consumption, linked to contingent causes, against the significant advantages of the process according to the present invention indicated above.

The second embodiment of the process according to the present invention has a pre-treatment phase without grinding for the preparation of a material to be subsequently treated with a dry thermal treatment.

In this case, movement of the residual material to be treated, will be avoided. The material, which is prepared on the treatment site in packagings required by law in terms of transportation of materials containing asbestos, in order to specifically prevent the dispersion of powders and fibres, is repositioned in specific stainless steel containers and closed therein to be subsequently subjected to thermal treatment.

The material downstream of the thermal treatment can be fed as recycled material to a cement kiln or cement grinding mill.

Once the material containing asbestos has been subjected to the inerting process according to the present invention, it is, in fact, totally compatible with cement and concrete. This material obtained from the inerting process can then be fed to two points of the technological cycle for the production of cement clinkers: to the head of the same process, i.e. in the crushing phase of the limestone, for example, after suitable weight dosage, or to the tail of the process, i.e. in the feeding to the cement grinding mill, after the possible size-reduction phase in a specific crusher.

In both cases, the cement produced complies with international, European and extra-European standards, and if the material is added at the head of the process it is completely indistinguishable from the cement not added. In this case, in fact, the inertized material is "re-processed" in the cement kiln and englobed in the clinker itself.

Alternatively, as already indicated, the inertized material, suitably ground to the fine dimensions typical of cement, can be added to concretes, as inert product.

The second embodiment of the process according to the present invention has a pre-treatment phase without grinding for the preparation of a material to be treated subsequently with a dry thermal treatment.

In this first pre-treatment phase, the residual material containing asbestos in size, previously prepared for transportation from the collection site to the treatment site, is appropriately inserted into non-sealed stainless steel containers, in order to avoid dispersion of material in the subsequent thermal treatment phase, i.e. to avoid direct contact between the material to be treated and the internal environment of the tunnel kiln.

Said containers have a variable form and dimension in relation to the size of the residual material containing asbestos to be treated and the geometrical dimensions of the tunnel kiln in which the subsequent thermal treatment is effected; the containers are typically parallelepipeds 2 m long, and about 0.5 m wide and high.

The material thus pre-treated is subjected to a thermal treatment which comprises a progressive heating from room temperature to a temperature higher than 900°C, preferably to a temperature of about 1,000-1,050°C.

Said process can be effected in a tunnel kiln consisting of a long corridor having an approximately rectangular section on whose side walls gas burners are assembled, capable of supplying the quantity of heat necessary for maintaining the charge at the desired temperature for 4-5 hours.

The material to be thermally treated, pre-treated as indicated above, is in the form of pallets above movable trolleys on rails, trolleys protected above by a layer of refractory bricks. The same applies to the walls and covering vault of the tunnel for the whole of its length, which can be estimated as being 15-20 m.

In the thermal treatment phase, the residual material containing asbestos progressively reaches a temperature of 1,000-1,050°C and remains there for the necessary time which can vary in relation to the size of the material to be treated, generally being maintained for 4 to 5 hours approximately, before reaching the second part of the kiln where there are no burners and the temperature of the material progressively decreases until the outlet of the kiln, at the opposite end of the tunnel with respect to the inlet end.

The temperatures and thermal treatment times indicated above, which can be regulated each time, depending on the geometrical size of the material introduced into the containers, guarantee the complete degradation of the residual material containing asbestos into a material which contains forsterite, which, as already indicated, is a mineral also present in nature, which no longer has any carcinogenic activity (Mg₂SiO₄).

Various tests were in fact carried out on the thermal transformation of chrysotile fibres, contained in asbestos-cement end-products to determine optimal temperatures and treatment times.

Baking tests were carried out according to the scheme of Table 1.

**Table 1**

| Baking tests | | | | |
|---|---|---|---|---|
| Temperature | Exposure time | | | (min) |
| 700°C | 10' | 20' | 30' | 40' |
| 800°C | 10' | 20' | 30' | 40' |
| 900°C | 10' | 20' | 30' | 40' |
| 1,000°C | 10' | 20' | 30' | 40' |

The sample as such and the products resulting from the various baking tests were ground to a particle-size lower than 90 microns and then attacked with a chloro-salicyl solution (compound from salicylic acid and hydrochloric acid in methanol; adaptation of the method described in ENV 196/4) in order to dissolve the cement components, the calcium carbonate and calcium oxide formed by decomposition of the carbonate.

The acid attack allows the samples to be enriched in the fibrous phases so as to better appreciate the decomposition degree of the asbestos. The residues of the acid attack were subjected to X-ray diffractometry examination in order to evaluate the transformations undergone by the end-product during the thermal treatment and in particular to evaluate the decomposition degree of the asbestos fibres. This examination showed that the chrysotile fibres present in the sample as such, remain in all the samples treated at 700°C and in the sample treated at 800°C for 10', with decreasing concentrations with an increase in the temperatures at the treatment times.

Table 2 indicates the percentages of asbestos remaining after the thermal treatment.

**Table 2**

| Residual quantities of asbestos after thermal treatment | | | | |
|---|---|---|---|---|
| Temperature | Exposure time | | | (min) |
| | 10' | 20' | 30' | 40' |
| 700°C | 45.8 | 2.9 | 0.6 | 0.2 |
| 800°C | 0.2 | 0 | 0 | 0 |
| 900°C | 0 | 0 | 0 | 0 |
| 1,000°C | 0 | 0 | 0 | 0 |

Examination of the diffractograms showed the transformation of chrysotile into forsterite, accompanied by quartz SiO₂, diopside CaO·MgO·2SiO₂, and periclase MgO. With an increase in the temperature, the forsterite also reacts and is transformed into calcium silicate and periclase.

The tests described above were able to verify that the temperatures and times envisaged in the process according to the present invention allow the asbestos to be completely eliminated, causing the formation of hydraulically active products.

The material obtained by the thermal treatment, cooled to room temperature, must be crushed to reduce its size to a maximum dimension of 100 mm; the crushed material can then be recycled to the production plant of clinkers.

As already mentioned, it can be fed into two points of the technological cycle for the production of cement clinkers: to the head of the process itself, i.e. in the crushing phase of the limestone, for example, after appropriate weight dosage, or to the tail of the process i.e. in the feeding to the cement-grinding mill, after a possible size-reduction phase in a specific crusher.

In the former case, the thermally treated material is sent to the grinding plant of the raw mixture, after weight dosage as component for forming the ground raw mixture according to the specifications envisaged by the plant, or alternatively it can be weight-dosed at the tail of the process, i.e. in the feeding to the cement grinding mill, as inert additive, in the proportions allowed by the various regulations for inert materials, generally in quantities lower than 5% by weight.

In the former case, the inertized residual material fed to the kiln together with the raw mixture is transformed into a cement clinker, undergoing a second high-temperature thermal treatment that causes the same residual material to be chemically combined in the clinker and give the compounds typical of the clinker itself; in the second case on the other hand, the inertized material is chemically identifiable, but, as already indicated, completely safe for the health, thanks to the thermal treatment to which it has been previously subjected.

The inertized material can also be recycled in the formation of concrete, as it is composed of two chemical substances, dicalcium silicate and magnesium oxide, already present in common Portland cement.

The thermal treatment of the residual material containing asbestos comprises the extraction of the combustion fumes from the tunnel kiln, said fumes being substantially free of powders, and from which the residual sensitive heat can be easily recovered by cooling them to 90-100°C to preheat the combustion air to 200°C, and consequently reduce the thermal energy consumptions of the plant.

As the residual material to be thermally treated is completely static with respect to the gases and is not re-mixed with these, the transfer of heat to the material being treated on the part of the gas flames almost exclusively takes place by direct irradiation of the containers, which, in turn, irradiate the residual material contained therein, whose temperature reaches 1,000-1,050°C, in equilibrium with the environment of the kiln. The containers are preferably not airtight, in order to compensate the variations in the specific volume of the air in the containers themselves.

The thermal treatment described above is of the continuous type; once the operating temperatures, which together form the thermal profile of the kiln, have been reached, in fact, the trolleys in sequence, which transport the stainless steel casings, in turn containing the material to be inertized, enter and pass through the plant at a constant rate, whereas the quantity of gaseous fuel supplied is also substantially constant, as the variations are extremely small and controlled moreover by the temperature inside the kiln, which must be kept constant and in any case higher than 1,000-1,050°C in the maximum temperature point.

The thermal treatment, however, can also be effected batchwise; the kiln is no longer of the tunnel type, but of the static type. One or more stainless steel containers are positioned in the cold kiln and then heated to 1,000-1,050°C for the appropriate time, and subsequently cooled. This type of "batch" process is obviously only suitable for small capacities, as there are long interruption times of the inerting process during the heating and cooling phases of the kiln itself. Furthermore, the characteristics of the product are completely identical to those of the thermal treatment process in continuous.

As already explained above, the quantity of said residual material containing asbestos, which can be introduced into the production process of clinkers, is only limited by the content of magnesium which can be present in cements, typically lower than 5% by weight with respect to the total weight. The raw materials are consequently suitably selected in order to limit the magnesium content to values generally much lower than those required by law. The quantity of residual material containing asbestos that can be added to the production process of clinkers, for example made of Portland cement, is therefore limited to the difference between the magnesium already present in the mixture and the magnesium content required by standards.

Considering that asbestos is only a small percentage of the materials containing it and that, in turn, magnesium is only a small part of the asbestos itself, there is a wide addition margin, in any case variable in relation to the quantity of magnesium naturally present in the raw materials already used. This limitation is therefore more theoretical than real.

An aspect to be taken into account with reference to said second embodiment of the process according to the present invention relates to the structuring of the load which must be transported by the single trolleys that pass through the tunnel kiln. The load must in fact be such as to allow the heat to be transmitted and penetrate as far as the heart of the charge. If it is true, in fact, that heat at 1,000°C is mainly transmitted by irradiation and that the contact of the material favours the dispersion of heat inside the charge, it should be remembered that asbestos has good insulating properties that contrast with the necessity of also bringing the heart of the charge to the appropriate temperature. The load of each single container positioned on the relative trolley must therefore be structured so as to leave spaces between the various layers of material, which therefore allow the hot gases to circulate, also activating, even if in the limited space inside each container, the heat transfer mechanism by convection. This prevents cold areas, i.e. areas in which the temperature does not reach 1,000°C, from also remaining during passage through the hot area of the kiln. The optimal structuring of the load is defined experimentally in relation to the type of material in size to be treated and obviously the type of kiln available.

Further characteristics and advantages of the invention will appear evident from the following example provided for illustrative and non-limiting purposes.

### Example 1

By introducing into the baking cycle of a plant for the production of clinkers, a quantity of material containing asbestos equal to 10% by weight of the total material fed, the supply of magnesium oxide in the clinker produced does not exceed 0.5% by weight, much lower than the limit value of 5% by weight required by standard EN 197.

On the basis of the present example, generally speaking, in a baking line of 3,000 tons per day of clinkers, from 450 to 500 tons per day of material containing asbestos in the above proportions can be fed and ultimately destroyed.

In the present example, representative of the process with wet pre-treatment, about 20 t/h of material containing asbestos and about 13 m³/h of water were fed, which were divided as follows: a first quantity of 4 m³/h in the discharge phase, 6 m³/h in the crushing phase and the remaining quantity in the grinding phase.

The slime thus obtained was fed to a kiln for the production of cement carried out at a temperature of 1,050°C for a time of 5 hours.

Due to the greater quantity of water to be evaporated in the baking line, an increase in the specific consumption of 60-70 Mcal/t of clinkers and a loss in the production capacity of 3-5 percentage points, was verified.

This loss in the production capacity was widely counterbalanced, however, by advantages in terms of health and safety previously indicated, and also by significant economic advantages: considering a line which produces 3,000 tons per day of clinkers, equivalent to 1 Mt per year, in fact, the various costs associated with the elimination of materials containing asbestos (electric energy, thermal energy, loss of income due to production losses, increase in fixed costs, plant depreciation) lead to a cost for the elimination of asbestos equivalent to about 18 €/t of material containing asbestos eliminated, which is reduced to about 12 €/t following depreciation after 5 operating years.
In detail:

| | | |
|---|---|---|
| 1. | quantity of materials containing asbestos disposed of | 160 kt/year |
| 2. | increase in thermal consumption | 70 Mcal /t clinker |
| 3. | electric consumptions associated with the treatment plant of materials containing | 30 kWh/t material |
| 4. | cost of plant | 5 M€ |
| 5. | unitary costs of electric energy | 65 €/MWh |
| 6. | unitary costs of thermal energy | 14 €/Gcal |
| 7. | MOL on cement | 30 €/t cement |
| 8. | Plant depreciation 1 | M€/year (for 5 years) |
| 9. | Fixed costs | 0.5 €/t cement |
| 10. | Production loss | 50,000 t cement/year |
| The following costs associated with the elimination of materials containing asbestos can be evaluated: | | |
| 11. | Cost of electric energy | 312,000 €/year |
| 12. | Cost of thermal energy | 940,000 €/year |
| 13. | Loss of income due to production losses | 150,000 €/year |
| 14. | Increase in fixed costs | 500,000 €/year |
| 15. | Plant depreciation | 1,000,000 €/year |
| Total | | 2,902,000 €/year |

as already indicated, equivalent to a cost of about 18 €/t of material containing asbestos eliminated, which is reduced to about 12 €/t following depreciation after 5 operating years.

### Example 2

In the present example, representative of the process with dry pre-treatment, about 5 t/h of material containing asbestos were treated, i.e. about 5 trucks/h with about 1 t/truck of material. In a kiln 20 m long, the trolleys move at about 5 m/h. The methane burners use 100 m³/h of gas, with a specific consumption of about 160 kcal/kg of material to be inertized.

## Claims

1. A process for inerting residual materials containing asbestos comprising a pre-treatment step of the residual material and a subsequent thermal treatment step at a temperature higher than 900°C and for a time exceeding 20 minutes, preferably at a temperature ranging from 1,000° to 1,100° and for a time ranging from 40 minutes to 5 hours.

2. The process according to claim 1, wherein the residual material containing asbestos to be treated consists of asbestos-cement end-products.

3. The process according to one or more of the previous claims, wherein the pre-treatment step is a pre-treatment step with wet grinding and the thermal treatment step is preferably carried out in a technological cycle kiln for the production of clinkers from cement.

4. The process according to claim 3, wherein the pre-treatment step with wet grinding is carried out by means of a first grinding treatment wherein the residual material containing asbestos, in the presence of water in such a quantity as to obtain slime having a humidity ranging from 35 to 40%, is crushed into pieces having maximum dimensions of 10 - 15 centimetres and a second grinding treatment which produces slime in which the particles of solid material have a fineness of a few tens of micrometres, preferably ranging from 5 to 50 micrometres, dispersed in slime.

5. The process according to one or more of claims 3 or 4, wherein the thermal treatment step at a temperature higher than 900°C for a time exceeding 20 minutes, is carried out in a technological cycle kiln for the preparation of clinkers, to which the slime containing asbestos, obtained at the end of the previous grinding step, is fed.

6. The process according to claim 5, wherein the slime containing asbestos obtained at the end of the grinding step, is fed to the dry kiln calciner with pre-calcination; to the ascending duct of the dry kiln pre-heater with only the pre-heater in suspension; to the inlet of the rotating pipe of semi-dry kilns; with a "mid kiln" injection system for "dry" or "wet" long kilns.

7. The process according to one or more of claims 1 or 2, wherein the pre-treatment step is a pre-treatment step without grinding, wherein the residual material containing sized asbestos is inserted in containers, preferably made of non-sealing stainless steel, and the thermal treatment step is carried out in continuous or batchwise, with progressive heating from room temperature to over 900°C and for a time longer than 20 minutes.

8. Use of the material inertized with the process according to claim 7 as raw material for the preparation of clinkers, as inert material or in the formation of concretes.
